# EUROPÄISCHE PATENTSCHRIFT

(11) **EP 1 549 405 B1**
(45) Veröffentlichungstag und Bekanntmachung des Hinweises auf die Patenterteilung: **05.11.2008**
(21) Anmeldenummer: 03748086.0
(22) Anmeldetag: 25.09.2003
(51) Int. Cl.: A63G 31/00

(54) **FLUGEINRICHTUNG**
FLYING DEVICE
DISPOSITIF VOLANT

(30) Priorität: 27.09.2002 DE 10245351
(43) Veröffentlichungstag der Anmeldung: 06.07.2005
(73) Patentinhaber: Wagels, Dieter, 52511 Geilenkirchen (DE)
(72) Erfinder: Wagels, Dieter, 52511 Geilenkirchen (DE)
(74) Vertreter: Grosse - Schumacher - Knauer - von Hirschhausen
(86) Internationale Anmeldenummer: PCT/EP2003/010659
(87) Internationale Veröffentlichungsnummer: WO 2004/030783

(56) Entgegenhaltungen:
- EP-A- 0 327 371
- AT-B- 399 196
- FR-A- 2 546 217
- GB-A- 921 398
- GB-A- 934 169
- GB-A- 1 226 384
- US-A- 3 676 964
- US-A- 3 752 419
- US-A- 3 933 325
- US-A- 5 996 933
- US-A- 6 053 451
- US-A- 6 119 983
- US-B1- 6 382 557

## Beschreibung

Vergnügungsvorrichtungen, die dem Teilnehmer ein Gefühl des Schwebens oder Fliegens vermitteln, sind als Kirmesattraktionen bekannt. Die bekannten Flugeinrichtungen sind allerdings so ausgebildet, daß der Teilnehmer oder Benutzer keine Möglichkeit besitzt bei der Nutzung derartiger Vergnügungsvorrichtungen selbst aktiv zu werden. Er ist vielmehr man einen Sitz gebunden, der auf einer festen Bahn zwangsgeführt ist, z.B. auf Schienen wie bei der Achterbahn, an einer vertikalen Säule oder an Gestängearmen. Der Teilnehmer kann also nur mitfahren aber nicht selbst irgend etwas am Ablauf des Erlebnisses selbst bestimmen. Er kann nicht selbst aktiv in den Flug oder den Schwebevorgang eingreifen.

Die GB921 398A befasst sich mit einem von räumlichen Begrenzungen freien Fliegen mittels eines Senkrechtstarters für hohe Fluggeschwindigkeiten und guten Manövereingenschaften.

Der Erfindung liegt die Aufgabe zugrunde, eine Flugeinrichtung zu schaffen, bei der ein aktives Fliegen oder Schweben der Teilnehmer möglich ist. Dies nicht nur unter dem Aspekt einer Vergnügungseinrichtung, sondern insbesondere auch als Trainingseinrichtung zur Schulung der motorischen und geistigen Fähigkeiten, die für die fliegerische Beherrschung von Plugeinrichtungen notwendig sind.

Zur Lösung dieser Aufgabe wird eine Flugeinrichtung mit den Merkmalen des Anspruchs 1 vorgeschlagen.

Die Flugeinrichtung umfaßt also eine Halle und mindestens eine darin frei flugfähige Flugeinheit, die vorzugsweise eine, unter Umständen aber auch zwei oder noch mehr Personen aufnehmen, vertikal starten und dann frei in der Halle umherfliegen kann.

Die Halle ist so gestaltet, daß ihre Begrenzungen es verhindern, daß eine Flugeinheit die Halle fliegend verläßt. Dies kann durch Vorsehung geschlossener Wandungen und einer geschlossenen Decke der Halle erreicht werden. Es ist aber nicht unbedingt notwendig, daß die Begrenzungen regelrecht geschlossen sind. Auch Gitterwerke kommen als Begrenzungen in Frage, so daß die Halle eine Art Käfig für die Flugeinheiten bildet. Es ist noch nicht einmal erforderlich, daß die Begrenzungen durch mechanische Mittel gebildet sind. Es könnte auch durch eine Fernsteuerung verhindert werden, daß eine Flugeinheit einen bestimmten Raumbereich verläßt. Bei Annäherung z.B. an eine vertikale derartige Begrenzung könnte die Flugeinheit zwangsweise abgelenkt oder abgesenkt werden.

Mit dem Ausdruck "Halle" sollen Gebilde der verschiedensten geometrischen Art erfaßt sein, soweit sie zur Aufnahme frei fliegender Flugeinheiten geeignet sind. Die einfachste und am wirtschaftlichsten zu realisierende Gestalt ist die eines allseits konvexen Raurrigebildes (Anspruch 2), insbesondere eines Quaders (Anspruch 3) mit rechteckigen ebenen Seitenflächen, doch kommen auch nicht-ebene Begrenzungsflächen in Betracht, z. B. runde aufrechte Begrenzungsflächen (Anspruch 4).

Die Gebilde müssen nicht allseits konvex gestaltet sein. Eine besonders in Betracht kommende Variante ist die einer Flugröhrenanordnung (Anspruch 5), insbesondere mit in sich selbst zurückführenden Flugröhren (Anspruch 6), in denen die Flugeinheiten auf geschlossenen Bahnen herumfliegen können.

Gemäß Anspruch 7 können auch mehrere Hallen verschiedenen Typs miteinander kombiniert sein.

Damit die Empfindung des freien Fluges hinreichend deutlich zur Geltung kommt, muß zwischen den Flugeinheiten und der Halle ein gewisses Größenverhältnis bestehen, damit eine ausreichende Beweglichkeit ohne alsbaldige Annäherung an die Begrenzungen gegeben ist. Beispielsweise sollte eine quaderförmige Halle in jeder Richtung mindestens die zwanzig- oder dreißigfache Ausdehnung einer einzelnen Flugeinheit besitzen. Die horizontalen Abmessungen der Halle werden häufig außer durch die wirtschaftlich realisierbare Größe auch durch den in einem Vergnügungspark oder dergleichen zur Verfügung stehenden Platz beschränkt sein.

Die Flugeinheiten werden in erster Linie danach ausgelegt sein, daß sie eine einzelne Person tragen können. Sie dürfen in ihren Abmessungen nicht zu groß sein, also nicht etwa so groß wie ein Kleinflugzeug, um das rechte Größenverhältnis zu einer praktisch verwirklichbaren Halle einzuhalten. Derartige Flugeinheiten sind für sich genommen bekannt. So schwebte beispielsweise bei der Eröffnung der Olympischen Spiele in Los Angeles ein Flieger mit einer raketengetragenen Flugeinheit im Stadion ein. Daß sich derartige Flugeinheiten inzwischen der kommerziellen Verwirklichung nähern, ergibt sich auch aus dem Aufsatz "Knopf drücken und abheben", der in der Wochenzeitschrift "WELT am SONNTAG" Nr. 33 vom 18. August 2002 veröffentlicht worden ist.

Die Erfindung ist nicht nur als Attraktion für einen Vergnügungspark oder eine Kirmes im Sinne eines Fahrgeschäftes geeignet, sondern auch als dauerhaft ortsfeste Installation im Sinne einer Gokart-Bahn. Auch hat die Erfindung nicht nur einen Vergnügungs- und Unterhaltungswert, sondern kann zum Training des Fliegens mit Flugeinheiten der in Rede stehenden Art für sportliche oder berufliche Zwecke dienen.

Die Flugeinheit könnte als Flugscheibe mit einer Plattform ausgebildet sein, in deren Zentrum der Platz für die Person und an der eine Hubaggregatanordnung vorgesehen ist (Anspruch 8). Eine solche Plattform könnte etwa einen Durchmesser von 3 bis 5 m aufweisen, um an ihr eine Hubaggregatanordnung ausreichender Leistung unterbringen zu können.

Die Hubaggregatanordnung könnte gemäß Anspruch 9 mehrere um das Zentrum verteilte einzelne Hubaggregate umfassen, die eine um das Zentrum herum gleichmäßig verteilte Hubwirkung entfalten.

Die Gleichmäßigkeit der Hubwirkung ist notwendig, um die Plattform in der Horizontalen zu halten. Die gleichmäßige Hubwirkung wird durch eine entsprechende Steuerung erzielt.

Bei dem bevorzugten Ausführungsbeispiel der Erfindung nach Anspruch 10 sind die Hubaggregate im Betrieb vertikal nach unten wirkende Hubgebläse, deren Antrieb in der Ausführungsform nach Anspruch 11 elektrisch erfolgen kann, beispielsweise in der Weise, daß die Energieversorgung des Antriebs gemäß Anspruch 12 über Kontaktschleifen in der Halle erfolgt.

Bei der alternativen Ausführungsform nach Anspruch 13 sind zum Antrieb der Hubaggregate auf der Plattform mitgeführte Brennkraftmaschinen vorgesehen. Eine weitere Alternative besteht gemäß Anspruch 14 darin, daß die Hubaggregate nach Art von Raketentriebwerken ausgebildet sind.

Eine wichtige Ausgestaltung der Erfindung besteht gemäß Anspruch 15 darin, daß mindestens eine Flugeinheit mit einer Positionserfassungsvorrichtung versehen ist, so daß die Position innerhalb der Halle in jedem Augenblick feststellbar ist.

Dies ist die Voraussetzung dafür, daß die Flugeinheit mittels einer Fernsteuereinrichtung steuerbar ist (Anspruch 16), sei es um eine Kollision der Flugeinheit mit anderen Flugeinheiten oder mit einer wie auch immer ausgebildeten Begrenzung der Halle zu vermeiden oder um bestimmte Flugeinheiten bedarfsweise auf den Boden zurückholen zu können (Anspruch 17).

Die Halle kann gemäß Anspruch 18 mindestens zwei Zonen umfassen und es kann das Fliegen mit der Flugeinheit auf eine oder bestimmte Zonen beschränkbar sein, beispielsweise für Anfänger auf eine niedrige bodennahe Zone.

Es empfiehlt sich gemäß Anspruch 19, daß mindestens eine Flugeinheit mit mit der Fernsteuereinrichtung verbundenen Abstandssensoren versehen ist, um die Gefahr von Kollisionen auszuschließen.

In der Zeichnung sind Ausführungsbeispiele der erfindungsgemäßen Flugeinrichtung schematisch dargestellt.
Fig. 1a und 1b zeigen die Umrisse in Betracht kommender Hallenformen;
Fig. 2 zeigt eine perspektivische Ansicht einer einzelnen Flugeinheit;
Fig. 3 zeigt eine stirnseitige Schnittansicht der Halle nach Fig. 1a etwa nach der Linie III-III in Fig. 1a;
Fig. 4 zeigt eine Seitenansicht der Halle nach Fig. 1a in Richtung des Pfeiles IV in Fig. 1 a;
Fig. 5 zeigt eine perspektivische Teilansicht eines Models einer Flugröhrenanordnung.

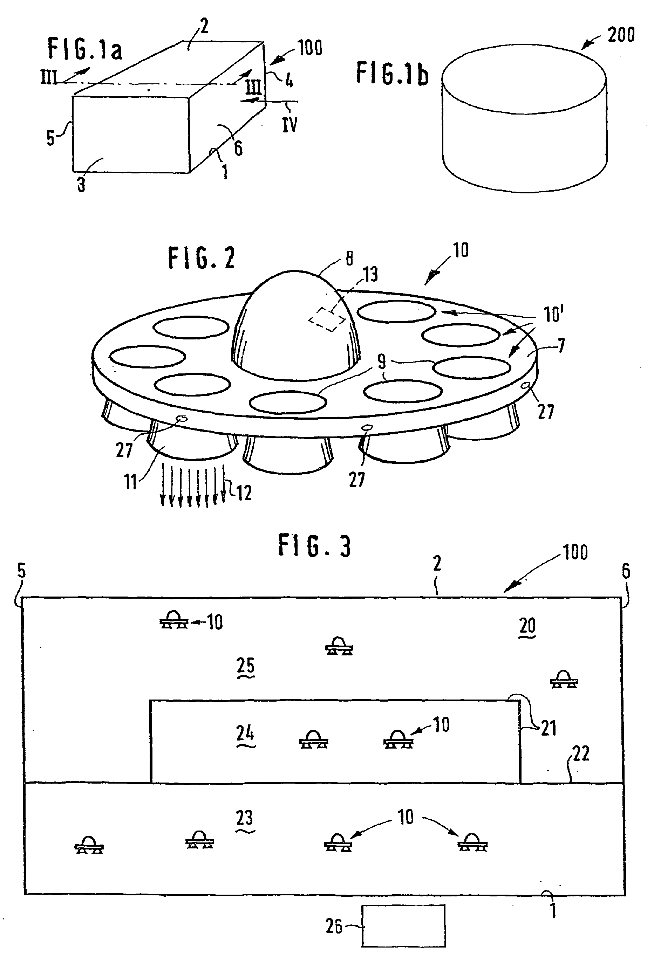

Die in Fig. 1a als Ganzes mit 100 bezeichnete Halle hat die Form eines rechteckigen Quaders mit einem Boden 1 einer Decke 2, zwei kürzeren rechteckigen Seitenflächen 3 und 4 und zwei längeren Seitenflächen 5 und 6. Die Flächen 2 bis 6 bilden Begrenzungen, die als geschlossene Wandungen ausgebildet sein können und auf die Weise das Verlassen der Halle 100 durch darin fliegende Flugeinheiten 10 (Fig. 2) verhindern oder die als "elektronische Wände" gestaltet sind, die mit der Steuerung der Flugeinheit 10 zusammenwirken, um das Verlassen des quaderförmigen Raumbereichs zu unterbinden.

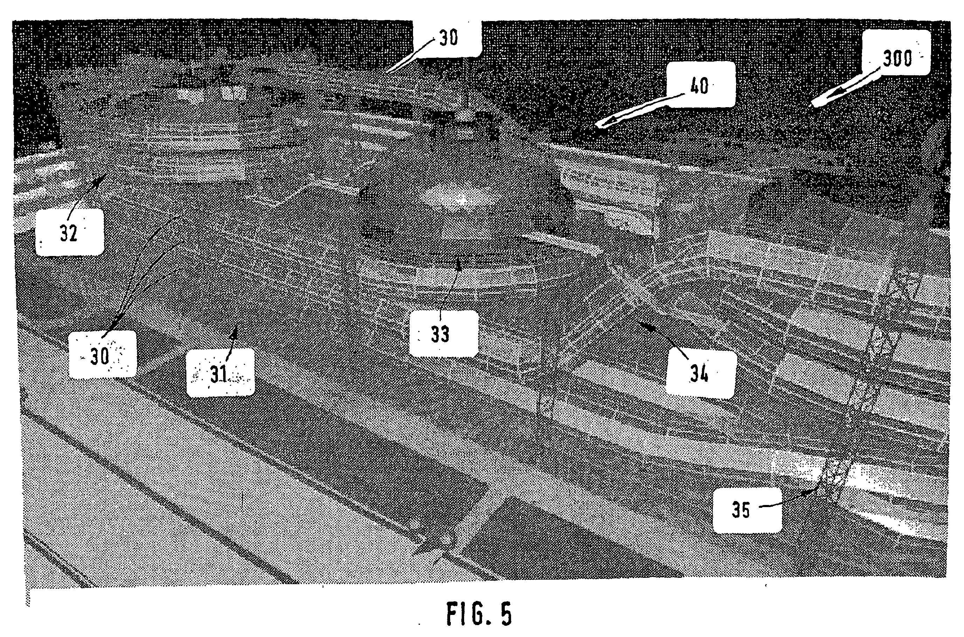

Die Quaderform ist nur ein Ausführungsbeispiel. In Fig. 1b ist eine andere mögliche Ausführungsform 200 einer Halle wiedergegeben, die die Form eines aufrechten Zylinderabschnitts hat, in Fig. 5 eine Halle 300, die als Flugröhrenanordnung 40 ausgestaltet ist.

In Fig. 2 ist ein einzelnes Flugelement 10 dargestellt, welches in dem Ausführungsbeispiel als Flugscheibe ausgebildet ist und eine Plattform 7 von kreisförmigem Grundriß umfaßt, die im Zentrum auf der Oberseite eine Kuppel 8 aus durchsichtigem Material wie z.B. Plexiglas trägt, in der im Betrieb der Flugeinheit 10 die Person sich befindet. Rings um die Kuppel 8 sind auf einem Teilkreis in der Plattform 7 gleichmäßig verteilt neun Hubaggregate 10' in der Gestalt von Hubgebläsen 9 mit nach unten gerichteten Düsen 11 angeordnet, aus denen die tragenden Gebläsestrahlen im Sinne der Pfeile 12 austreten. Durch eine geeignete selbsttätige Steuerung kann dafür gesorgt werden, daß die Hubwirkung der Hubgebläse 9 über den Umfang gleichmäßig ist, so daß die Plattform 7 im Flug im wesentlichen horizontal bleibt. Wenn die Plattform 7 einen Durchmesser von etwa 3 m aufweist, lassen sich in der gezeigten Anordnung Hubgebläse 9 genügender Leistung unterbringen, um mindestens eine Person in der Kuppel 8 zu heben und fliegen zu lassen. Der kreisförmige Grundriß der Plattform 7 und die Zahl von neun Hubgebläsen 9 sind lediglich Merkmale des Ausführungsbeispiels, jedoch nicht zwingend.

Die Person in der Kuppel 8 hat eine in Fig. 2 gestrichelt angedeutete handbetätigte Steuereinrichtung 13 zur Verfügung, um die Leistungsabgabe der Gebläse 9 und damit das Steigen und Sinken zu steuern. Sie kann auch die Fortbewegungsrichtung bestimmen, sei es durch geeignete Beeinflussung der Hubgebläse 9, sei es durch nicht dargestellte horizontal wirkende Zusatzdüsen.

Wenn es sich bei den Hubaggregaten 10' der Flugeinheit 10 um Hubgebläse 9 handelt, können diese elektrisch angetrieben sein, wobei der Strom über entsprechende Kontaktschleifen in der Halle 100, 200, 300 so zugeführt werden kann, daß die freie Beweglichkeit der Flugeinheit 10 innerhalb der Halle 100, 200, 300 erhalten bleibt.

Der Antrieb der Hubgebläse 9 kann aber auch über Brennkraftmaschinen erfolgen, was den anlagemäßigen Aufwand verringert. Es ist auch nicht ausgeschlossen, statt der Hubgebläse 9 eine Art von Raketenantrieb einzusetzen.

Die technische Ausgestaltung der Flugeinheit 10 im einzelnen ist nur als Ausführungsbeispiel zu verstehen. Maßgeblich ist der Gedanke, derartige Flugeinheiten 10 in einer Halle 100, 200, 300 frei fliegen zu lassen, wie es für die Halle 100 in Fig. 3 angedeutet ist.

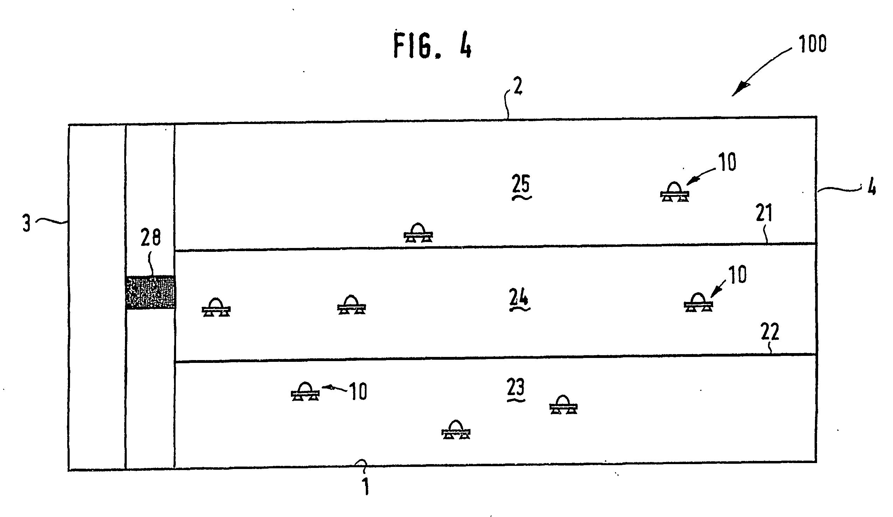

In dem freien Innenraum 20 der Halle 100 können mehrere Flugeinheiten 10 frei umherfliegen. Die Flugeinheiten 10 sind in den Fig. 3 und 4 gegenüber der Darstellung in Fig. 2 vereinfacht wiedergegeben.

Die Halle 100 weist die in Fig. 1a wiedergegebenen Begrenzungsflächen auf, die z.B. durch ein Gitterwerk aus Metall gebildet sein können, so daß die fliegende Person eine Sicht ins Freie hat und somit ein besseres Fluggefühl möglich ist.

Die Halle 100 ist im Innern durch zusätzliche Begrenzungen 21,22 in drei Zonen 22,24,25 unterteilt. Die unterste Zone 23 ist bodennah und den Anfängern vorbehalten. Jede Flugeinheit 10 umfaßt eine Positionserfassungseinrichtung, die mit einer Fernsteuereinrichtung 26 zusammenwirkt, die die einzelnen Flugeinheiten 10 identifizieren und den Aufenthalt in der vorgesehenen Zone 23,24 oder 25 kontrollieren kann. Bei einer Überschreitung der Zonenzugehörigkeit und auch bei technischen Problemen kann mittels der Fernsteuereinrichtung 26, die die Priorität über die Handsteuereinrichtung 13 (Fig. 2) genießt, eine jede Flugeinheit auf dem Boden 1 zurückgebracht werden.

Außer der Steuerung über die Fernsteuereinrichtung 26 können an den einzelnen Flugeinheiten Abstandssensoren 27 (Fig. 2) vorgesehen sein, um Kollisionen mit anderen Flugeinheiten 10 oder den Hallenbegrenzungen 3,4,5,6, zu vermeiden.

Die Begrenzungen 21,22, die im Innern 20 der Halle 100 die Zonen 23,24,25 voneinander abteilen, können "elektronische Wände" sein. Wenn es sich aber bei 21,22 um mechanische Begrenzungen durch Gitterwände handelt, erfolgt der Zugang zu den Zonen 24,25 mit Hilfe eines Fahrstuhls 28, der eine Flugeinheit 10 in eine der erhöht liegenden Zonen 24, 25 hochfördert und sie in die betreffende Zone entläßt. Es ist jedoch auch denkbar, daß die Flugeinheiten 10 zunächst durch ein Seil in die höher gelegenen Zonen 24,25 bewegt werden und die Verbindung erst gelöst wird, wenn die betreffende Flugeinheit 10 schon schwebt. Durch eine derartige Seilverbindung ist es auch möglich, die Flugeinheit 10 in der Startphase abzusichern und einen Absturz zu vermeiden, wenn die erforderliche Hubleistung nicht erreicht werden sollte.

Während die Hallen 100, 200 eine allseits konvexe Gestalt aufweisen, ist in Fig. 5 eine "Halle" 300 erkennbar, die aus einer Anordnung 40 von Flugröhren 30 besteht. Die Flugröhren 30 sind röhrenförmige Gebilde, deren Wandungen ebenso wie bei der Halle 100 als geschlossene körperliche Begrenzungen ausgebildet sein können, z. B. als Gitterwerk oder als Kunststofftafeln. Es kommen aber auch für die Flugröhren 30 "elektronische Wände" in Betracht. Der lichte Querschnitt der Flugröhren 30 ist vorwiegend konvex und von einer Größe, die ein behinderungsfreies Fliegen der Flugeinheiten 10 ermöglicht. Um ein Anstoßen an den Begrenzungen zu vermeiden, müßte der lichte Querschnitt einer Flugröhre 30 in allen Richtungen etwa das Fünf- bis Zwanzigfache des Durchmessers der Flugeinheit 10 betragen.

Die einfachste Ausführung einer Flugröhrenanordnung ist eine gerade horizontale Flugröhre, die auf einer geraden Bahn durchflogen werden kann, zum Beispiel in einer größeren quaderförmigen Halle 100 oder aus einer solchen Halle heraus in eine andere solche Halle 100.

Die nächste Stufe wäre eine ringförmige Flugröhre, die eine in sich geschlossene Bahn der Flugeinheit 10 erlaubt.

In Fig. 5 ist eine erheblich komplexere Flugröhrenanordnung 40 angedeutet, in der auch Steigungen vorgesehen sind und eine ausgedehnte und abwechslungsreiche Strecke zurückgelegt werden kann. In dem Bereich 31 verlaufen drei Abschnitte der Flugröhre 30 in mehreren Ebenen übereinander. In dem Bereich 32 bildet die Flugröhre 30 eine Schraubenbahn, von der aus die Flugröhre 30 in eine Art Kuppel 33 übergeht, die eine allseits konvexe "Halle" darstellt. Im Bereich 34 vollführt die Flugröhre 30 eine kräftige Steigung von etwa 45°.

Die Flugröhrenanordnung 40 wird von portalartigen Tragkonstruktionen 35 getragen. Sie ist zwar räumlich ziemlich ausgedehnt, kann jedoch leicht ausgeführt sein, da die Flugröhrenanordnung 40 nur eine Begrenzungsfunktion aufweist und außer ihrem Eigengewicht nichts zu tragen hat.

## Patentansprüche

1. Flugeinrichtung, bestehend aus mindestens einer zur Aufnahme einer oder weniger Personen geeigneten vertikalstartfähigen Flugeinheit (10) für das freie Fliegen innerhalb mindestens einer Halle (100,200), ferner umfassend die mindestens eine Halle, wobei die mindestens eine Halle Begrenzungen (2,3,4,5,6) aufweist und Steuerungsmittel vorgesehen sind, die es verhindern, daß die mindestens eine Flugeinheit (10) die mindestens eine Halle (100,200,300) verläßt.

2. Flugeinrichtung nach Anspruch 1, **dadurch gekennzeichnet, daß** die Halle (100,200) eine allseits konvexe Gestalt aufweist.

3. Flugeinrichtung nach Anspruch 2, **dadurch gekennzeichnet, daß** die Halle (100) eine quaderförmige Gestalt aufweist.

4. Flugeinrichtung nach Anspruch 2, **dadurch gekennzeichnet, daß** die Halle (200) zylinderförmig gestaltet ist.

5. Flugeinrichtung nach Anspruch 1, **dadurch gekennzeichnet, daß** die Halle (300) durch eine Flugröhrenanordnung (40) gebildet ist.

6. Flugeinrichtung nach Anspruch 5, **dadurch gekennzeichnet, daß** die Flugröhrenanordnung in sich selbst zurückführende Flugröhren umfaßt, so daß sich die Flugeinheit (10) auf einer geschlossenen Bahn bewegen kann.

7. Flugeinrichtung nach einem der Ansprüche 2 bis 6, **dadurch gekennzeichnet, daß** sowohl mindestens eine allseits konvexe Halle (100, 200) als auch eine durch eine Flugröhrenanordnung gebildete Halle (300) vorgesehen sind und die Flugeinheit (10) sich in die andere bewegen kann.

8. Flugeinrichtung nach einem der Ansprüche 1 bis 7, **dadurch gekennzeichnet, daß** die Flugeinheit (2) als Flugscheibe mit einer Plattform (7) ausgebildet ist, in deren Zentrum der Platz für die Person und an der eine Hubaggregatanordnung vorgesehen sind.

9. Flugeinrichtung nach Anspruch 8, **dadurch gekennzeichnet, daß** die Hubaggregatanordnung mehrere um das Zentrum herum verteilte einzelne Hubaggregate (10') umfaßt, die eine um das Zentrum herum gleichmäßig verteilte Hubwirkung entfalten.

10. Flugeinrichtung nach Anspruch 8 oder 9, **dadurch gekennzeichnet, daß** die Hubaggregate (10') im Betrieb vertikal nach unten wirkende Hubgebläse (9) sind.

11. Flugeinrichtung nach einem der Ansprüche 8 bis 10, **dadurch gekennzeichnet, daß** der Antrieb der Hubaggregate (10') elektrisch erfolgt.

12. Flugeinrichtung nach Anspruch 11, **dadurch gekennzeichnet, daß** die Energieversorgung des Antriebs über Kontaktschleifen in der Halle (100,200) erfolgt.

13. Flugeinrichtung nach einem der Ansprüche 8 bis 12, **dadurch gekennzeichnet, daß** zum Antrieb der Hubaggregate (10') auf der Plattform (7) mitgeführte Brennkraftmaschinen vorgesehen sind.

14. Flugeinrichtung nach Anspruch 8 oder 9, **dadurch gekennzeichnet, daß** die Hubaggregate (10') nach Art von Raketentriebwerken ausgebildet sind.

15. Flugeinrichtung nach einem der Ansprüche 1 bis 14, **dadurch gekennzeichnet, daß** mindestens eine Flugeinheit (10) mit einer Positionserfassungsvorrichtung versehen ist.

16. Flugeinrichtung nach Anspruch 15, **dadurch gekennzeichnet, daß** die Flugeinheit (10) mittels einer Fernsteuereinrichtung (26) steuerbar ist.

17. Flugeinrichtung nach Anspruch 16, **dadurch gekennzeichnet, daß** die Flugeinheit (10) fernsteuerbar in eine Ruheposition am Boden (1) überführbar ist.

18. Flugeinrichtung nach einem der Ansprüche 1 bis 17, **dadurch gekennzeichnet, daß** die Halle (100,200) mindestens zwei Zonen (23,24,25) umfaßt und daß das Fliegen mit der Flugeinheit (10) durch die Fernsteuereinrichtung (26) auf eine oder bestimmte der Zonen (23,24,25) beschränkbar ist.

19. Flugeinrichtung nach einem der Ansprüche 15 bis 18, **dadurch gekennzeichnet, daß** mindestens eine Flugeinheit (10) mit mit der Fernsteuereinrichtung (26) verbundenen Abstandssensoren (27) versehen ist.

## Claims

1. Flying installation consisting of at least one flight unit (10), designed to accommodate one or fewer persons and capable of taking off vertically, for flying freely within at least one hall (100, 200), also comprising the at least one hall, said at least one hall having limitations (2, 3, 4, 5, 6) and control means being provided which prevent the at least one flight unit (10) from leaving the at least one hall (100, 200, 300).

2. Flying installation according to claim 1, **characterised in that** the hall (100, 200) possesses a convex form on all sides.

3. Flying installation according to claim 2, **characterised in that** the hall (100) possesses a rectangular form.

4. Flying installation according to claim 2, **characterised in that** the hall (200) is cylindrical in form.

5. Flying installation according to claim 1, **characterised in that** the hall (300) is formed by an arrangement of flight tubes (40).

6. Flying installation according to claim 5, **characterised in that** the arrangement of flight tubes comprises flight tubes leading back into themselves, so that the flight unit (10) can move on a closed path.

7. Flying installation according to one of claims 2 to 6, **characterised in that** both a hall which is convex on all sides (100, 200) and a hall formed by an arrangement of flight tubes (300) are provided and the flight unit (10) can move into the other.

8. Flying installation according to one of claims 1 to 7, **characterised in that** the flight unit (2) is in the form of a flying disk with a platform (7) with space for the person in the centre and which is provided with an arrangement of lift assemblies.

9. Flying installation according to claim 8, **characterised in that** the arrangement of lift assemblies comprises several individual lift assemblies (10') distributed around the centre which provide a lift effect distributed evenly around the centre.

10. Flying installation according to claim 8 or 9, **characterised in that** the lift assemblies (10') are lifting fans (9) acting downwards when in operation.

11. Flying installation according to one of claims 8 to 10, **characterised in that** the lift assemblies (10') are electrically driven.

12. Flying installation according to claim 11, **characterised in that** the energy supply for the drive is provided via contact loops in the hall (100, 200).

13. Flying installation according to one of claims 8 to 12, **characterised in that** internal combustion engines carried on the platform (7) are provided in order to drive the lift assemblies (10').

14. Flying installation according to claim 8 or 9, **characterised in that** the lift assemblies (10') are designed in the nature of rocket engines.

15. Flying installation according to one of claims 1 to 14, **characterised in that** at least one flight unit (10) is provided with a position-determining device.

16. Flying installation according to claim 15, **characterised in that** the flight unit (10) can be controlled by means of a remote control device (26).

17. Flying installation according to claim 16, **characterised in that** the flight unit (10) can be brought to rest on the ground (1) by remote control.

18. Flying installation according to one of claims 1 to 17, **characterised in that** the hall (100, 200) comprises at least two zones (23, 24, 25) and that flying with the flight unit (10) can be restricted to one or certain of the zones (23, 24, 25) through the remote control device (26).

19. Flying installation according to one of claims 15 to 18, **characterised in that** at least one flight unit (10) is provided with distance sensors (27) connected with the remote control device (26).

## Revendications

1. Installation de vol, composée d'au moins une unité volante (10) adaptée pour recevoir une ou plusieurs personnes et capable de décoller verticalement pour voler librement à l'intérieur d'au moins un hangar (100, 200), comprenant en outre ledit au moins un hangar, dans laquelle ledit au moins un hangar présente des limites (2, 3, 4, 5, 6), et des moyens de commande sont prévus qui empêchent que ladite au moins une unité de vol (10) ne quitte ledit au moins un hangar (100, 200, 300).

2. Installation de vol selon la revendication 1, **caractérisée en ce que** le hangar (100, 200) présente une configuration convexe sur tous les côtés.

3. Installation de vol selon la revendication 2, **caractérisée en ce que** le hangar (100) présente une configuration parallélépipédique.

4. Installation de vol selon la revendication 2, **caractérisée en ce que** le hangar (200) est configuré de façon cylindrique.

5. Installation de vol selon la revendication 1, **caractérisée en ce que** le hangar (300) est formé par un agencement de tubes de vol (40).

6. Installation de vol selon la revendication 5, **caractérisée en ce que** l'agencement de tubes de vol comprend des tubes de vol revenant sur eux-mêmes de sorte que l'unité de vol (10) peut se déplacer sur un parcours fermé.

7. Installation de vol selon l'une quelconque des revendications 2 à 6, **caractérisée en ce qu'**à la fois au moins un hangar (100, 200) convexe sur tous les côtés et un hangar (300) formé par un agencement de tubes de vol sont prévus et l'unité de vol (10) peut se déplacer de l'un à l'autre.

8. Installation de vol selon l'une quelconque des revendications 1 à 7, **caractérisée en ce que** l'unité de vol (2) est réalisée comme un disque volant avec une plate-forme (7) au centre de laquelle est prévu l'emplacement pour la personne et sur laquelle un agencement de groupes de sustentation est prévu.

9. Installation de vol selon la revendication 6, **caractérisée en ce que** l'agencement de groupes de sustentation comprend plusieurs groupes de sustentation (10') individuels répartis autour du centre et qui développent un effet de sustentation réparti de façon homogène autour du centre.

10. Installation de vol selon la revendication 8 ou 9, **caractérisée en ce que** les groupes de sustentation (10') sont des ventilateurs de sustentation (9) agissant vers le bas en cours de fonctionnement.

11. Installation de vol selon l'une quelconque des revendications 8 à 10, **caractérisée en ce que** l'entraînement des groupes de sustentation (10') est effectué de façon électrique.

12. Installation de vol selon la revendication 11, **caractérisée en ce que** l'alimentation en énergie de l'entraînement s'effectue par des boucles de contact dans le hangar (100, 200).

13. Installation de vol selon l'une quelconque des revendications 8 à 12, **caractérisée en ce que** pour l'entraînement des groupes de sustentation (10'), des moteurs à combustion interne embarqués sur la plate-forme (7) sont prévus.

14. Installation de vol selon la revendication 8 ou 9, **caractérisée en ce que** les groupes de sustentation (10') sont réalisés à la manière de moteurs-fusées.

15. Installation de vo1 selon l'une quelconque des revendications 1 à 14, **caractérisée en ce qu'**au moins une unité volante (10) est munie d'un dispositif de détection de position.

16. Installation de vol selon la revendication 15, **caractérisée en ce que** l'unité volante (10) peut être commandée au moyen d'un dispositif de télécommande (26).

17. Installation de vol selon la revendication 16, **caractérisée en ce que** l'unité volante (10) peut être amenée par télécommande dans une position de repos au sol (1).

18. Installation de vol selon l'une quelconque des revendications 1 à 17, **caractérisée en ce que** le hangar (100, 200) comprend au moins deux zones (23, 24, 25) et **en ce que** le vol avec l'unité volante (10) peut être limité par le dispositif de télécommande (26) à une zone ou à des zones déterminées parmi les zones (23, 24, 25).

19. Installation de vol selon l'une quelconque des revendications 15 à 18, **caractérisée en ce qu'**au moins une unité volante (10) est munie de capteurs de distance (27) reliés au dispositif de télécommande (26).
